# EUROPEAN PATENT APPLICATION

(11) **EP 3 547 245 A1**
(43) Date of publication of application: **02.10.2019**
(21) Application number: 19165449.0
(22) Date of filing: 27.03.2019
(51) Int. Cl.: G06Q 30/02

(54) **SYSTEM AND METHOD FOR PRODUCING A CUSTOMIZED VIDEO FILE**

(30) Priority: 27.03.2018 US 201862648419 P
(71) Applicant: Easy Hi Ltd., Tortola (VG)
(72) Inventor: MORE, Tom, 6998806 Tel Aviv (IL); AZATCHI, Yariv, 4437607 Kfar Saba (IL); RISCHIN, Ran, 1294400 Bnei Yehuda (IL); MIRALIMOV, Nodir, 7523923 Rishon LeZion (IL)
(74) Representative: Pearl Cohen Zedek Latzer Baratz UK LLP

(57) **Abstract**

Embodiments of the invention may include a system and a method of producing a customized video file by at least one processor. Embodiments may include: receiving one or more user actions and/or one or more registration attributes; creating a draft video file according to the received user actions and/or registration attributes; publishing the draft video file on at least one online platform; obtaining performance data, pertaining to viewing of the published draft video file, from the at least one online platform; analyzing one or more data elements of the one or more user actions, the one or more registration attributes and the obtained performance data, to produce at least one recommendation for customizing or editing the draft video file; and editing the draft video file according to the at least one recommendation, to produce a customized video file.

## Description

### RELATED APPLICATION DATA

This application claims the benefit of U.S. Serial No. 62/648,419, filed on March 27, 2018 and entitled "SYSTEM AND METHOD FOR PRODUCING A CUSTOMIZED VIDEO FILE" which is incorporated in their entirety herein by reference.

### FIELD OF THE INVENTION

The present invention relates generally to the field of creating video files. More specifically, the present invention relates to using automated analysis, to customize video content.

### BACKGROUND OF THE INVENTION

Modern online services harness the capabilities of machine learning algorithms for the purpose of profiling online viewers of video files, according to the viewers' behavior during presentation of the video, and according to the viewers' responsiveness to the content of the video. For example, online services may predict a user's preferred taste in music, to select a playlist according to the user's previous selections, and according to cumulative filtering of similar users.

However, as online services such as described above serve to profile the requirements and preferences of consumers and end users (e.g.: online video viewers), they do not address the requirements and preferences of the suppliers of online services and products, and producers of online video files.

### SUMMARY OF THE INVENTION

A system and a method for profiling of requirements and preferences from both a supplier's perspective and a consumer's perspective, and production of consequent video files are therefore desired.

Embodiments of the present invention include an Artificial Intelligence (AI)-based video push recommendation system that may combine video content, text and audio content, personalized for the user's business objectives, and enable the user to consistently publish various types of videos to promote their business, while minimizing the effort of video customization.

Embodiments of the present invention include a system and a method of producing a customized video file by at least one processor.

Embodiments may include one or more steps of: (a) receiving a plurality of selectable audiovisual elements; (b) receiving user input associated with the selectable audiovisual elements; (c) creating a video file based on the selectable audiovisual elements and received user input; (d) publishing the video file on an online platform; (e) obtaining feedback data from the online platform; and (f) analyzing information pertaining to the user input and feedback data, to produce at least one recommendation for selection of at least one audiovisual element.

Embodiments may include one or more of:
receiving one or more user actions and/or one or more registration attributes;
creating a draft video file according to the received user actions and/or registration attributes;
publishing the draft video file on at least one online platform;
obtaining performance data, pertaining to viewing of the published draft video file, from the at least one online platform;
analyzing one or more data elements of the one or more user actions, the one or more registration attributes and the obtained performance data, to produce at least one recommendation for customizing or editing the draft video file;
and editing the draft video file according to the at least one recommendation, to produce a customized video file.

The at least one recommendation may include at least one of:
a suggested addition of one or more audiovisual elements to the draft video;
a suggested modification of one or more audiovisual elements in the draft video;
a suggested omission of one or more audiovisual elements from the draft video;
a suggested configurable animated video template; and
a suggested default draft video.

The recommendation may be presented to the user on a user interface (UI) as one or more lists of selectable elements. The one or more lists may include for example, selectable default draft videos and selectable audiovisual elements. The list of selectable audiovisual elements may include at least one of: a list of visual content elements, a list of audio content elements, a list of themes and a list of textual elements.

Embodiments of the present invention may include receiving at least one performance target, and the at least one recommendation may be adapted to meet the received at least one performance target.

Embodiments of the present invention may include repeating the analysis of the one or more data elements to produce the at least one recommendation and editing the draft video file iteratively, until the at least one performance target may be met.

The registration attributes may include, for example: a type of a customized video required by the user, a category of the customized video type, a geolocation related data element, a language related data element and a timing of intended presentation of the customized video file.

Embodiments of the present invention may include receiving user input to perform the user actions on a video editor module, so as to create the draft video file. The at least one user action may include, for example: selection of at least one audiovisual element from a list of selectable audiovisual elements, placement of at least one audiovisual element on a display, time-wise ordering of selected audiovisual elements, application of at least one configuration to a configurable animated video template, performing a web-search action for one or more audiovisual elements and interaction (e.g., acceptance, rejection and/or modification) of a user with the at least one recommendation.

The selectable audiovisual elements may include, for example: an animated video template, a visual content element, an audio content element, a theme, a narration of text, and a textual element.

The performance data may include, for example, at least one feedback of one or more viewer actions performed by one or more viewers of the at least one online platform. Embodiments of the invention may obtain the performance data by 'pulling' (as commonly referred to in the art) data pertaining to the at least one feedback, using at least one application programming interface (API) of a service respective to the at least one online platform.

The at least one feedback of one or more viewer actions may include, for example: a number of complete views of the draft video, a number of interrupted views of the draft video, a number of mouse clicks relating to presentation of the draft video, a number of 'like' feedbacks relating to presentation of the draft video, a number of 'dislike' feedbacks relating to presentation of the draft video, a number of user comments relating to presentation of the draft video, and a content of user comments relating to presentation of the draft video.

Embodiments may aggregate one or more data elements pertaining to a one or more customized video files in a database. The aggregated one or more data elements may include, for example: a user action, a registration attribute, a performance data element, a produced recommendation, and the one or more customized video files and/or a reference thereto.

Embodiments of the invention may include analyzing the one or more data elements by learning (e.g., by a machine learning (ML)-based model) one or more preferences of a specific user and/or one or more preferences of a plurality of users.

The recommendation for customizing the draft video file may include presenting to a user (e.g., on a user interface) at least one list that may include one or more selectable audiovisual elements. The at least one list may be customized according to the user's preferences and/or according to the preferences of the plurality of users.

According to some embodiments, analyzing of the one or more data elements may include:
grouping the plurality of customized video files in a grouping model;
assigning a score to one or more audiovisual elements included in the grouped, customized video files;
associating the draft video file with a group of the grouping model; and
producing the at least one recommendation for customizing or editing the draft video file based on scores of audiovisual elements included in customized video files of the associated group.

According to some embodiments, assigning a score to one or more audiovisual elements may include at least one of:
monitoring user actions in relation to one or more recommendations may include at least one audiovisual element;
monitoring user actions in relation to one or more audiovisual elements;
applying one or more weights to one or more audiovisual elements based on the monitored user actions; and
accumulating the one or more weights to assign one or more scores to respective one or more audiovisual elements.

According to some embodiments, assigning a score to one or more audiovisual elements may include at least one of:
monitoring viewer actions in relation to one or more published draft videos may include at least one audiovisual element;
monitoring viewer actions in relation to one or more published customized videos may include at least one audiovisual element;
applying one or more weights to one or more audiovisual elements based on the monitored viewer actions; and
accumulating the one or more weights to assign one or more scores to respective one or more audiovisual elements.

Embodiments of the present invention may include a system for producing a customized video file. Embodiments of the system may include one or more non-transitory memory devices, wherein modules of instruction code may be stored, and one or more processors associated with the one or more memory devices. The one or more processors may be configured to execute the modules of instruction code, whereupon execution of said modules of instruction code, the one or more processors may be further configured to perform at least one method of producing a customized video file, as elaborated herein.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a block diagram, depicting a computing device, which may be included within a system for producing customized video files, according to some embodiments;
Fig. 2 is a flow diagram, depicting a method for producing customized video files according to some embodiments;
Fig. 3 is a block diagram, depicting a system for producing customized video files, according to some embodiments; and
Fig. 4 is a flow diagram, depicting a method for producing customized video files, according to some embodiments.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well known methods, procedures, and components have not been described in detail so as not to obscure the present invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items. Unless explicitly stated, the method embodiments described herein are not constrained to a particular order or sequence. Additionally, some of the described method embodiments or elements thereof can occur or be performed simultaneously, at the same point in time, or concurrently.

The following table, Table 1 includes a reference to terms that may be used herein

**Table 1**

| | |
|---|---|
| Video | When used herein, video may refer to a series of still images which when displayed in series, e.g. at 25 or 30 or another rate of frames per second, produces for a viewer a moving image. Additionally, a video as referred to herein may further include an audio stream. |
| User | The term user may be used herein to refer to a human user of a computing device, who may utilize embodiments of the present invention to produce one or more customized video files. |
| Viewer | The term viewer may be used herein to refer to a human viewer, who may view a video that may be produced by the user. |
| Draft video | The term "draft video" or "draft video file" may be used herein to refer to an initial video file that may be produced by the user and may be altered or customized according to one or more input data elements, to create a customized video file. |
| | According to some embodiments, a draft video file may be produced by a user (e.g., on a video editor), as elaborated herein. Alternately, or additionally, a draft video file may be produced by embodiments of the present invention and may be presented to a user for selection, as part of a recommendation. |
| Customized video | The term "customized video" or "customized video file" may be used herein to refer to a video that may be presented to online viewers, in a file format or in a streaming video format and may be customized embodiments of the invention according to at least one of the user's preference and at least one performance target. |
| | According to context, a video may be at the same time both a "draft video" and "customized video": as elaborated herein, embodiments of the invention may perform customization of a video file in a single step or as an ongoing, iterative process. In cases as the latter, customized video files may be "recustomized" (e.g., by a user, on a video editor module), and hence may be regarded as draft video files in that context. |
| Audiovisual element | The term "audiovisual elements" may be used herein to refer to one or more data elements that may be included in a draft video and/or a customized video. Audiovisual elements may be selected from a list including, for example: |
| | visual content elements (e.g., objects and/or characters that may appear on the screen, a background image, and the like); audio content elements (e.g., narration of text, a sound, a tune or a theme, etc.); textual elements (e.g., text, font, style, color and appearance of text on the screen); and default draft videos or video templates such as an animated video template. |
| Registration attributes | The term "registration attributes" may be used herein to refer to one or more data elements that may attributed or assigned to a customized video file, such as: one or more parameters of a user's identity, a type of the customized video required by the user (e.g.: a public service video, a commercial, etc.), a category of the customized video type (e.g.: for a commercial type video, this may be a commercial for a gift shop, a restaurant, a service, etc.), geolocation related data (e.g.: countries where the customized video is intended to be presented), language related data elements (e.g., a language or dialect in which the customized video should be presented), and timing of an intended presentation of the customized video file (e.g., in vicinity to holidays, at a predefined season, on predefined days of the week, at predefined times of the day, etc.). |
| User action | The term "user action" may be used herein to refer to one or more actions that a user may perform on a user interface (UI) of a video editor, during or in relation to generation of a customized video file, including for example: performing a search (e.g., by a search engine on a computer network) for an audiovisual element; selecting one or more audiovisual elements from a list of selectable audiovisual elements, time-wise ordering of selected audiovisual elements, rendering a video file that may include the one or more selected audiovisual elements, applying at least one configuration to a configurable animated video template; publishing the rendered video file on an online platform; interacting with (e.g., accepting or rejecting) a recommendation for customization of a draft video file, and the like. |
| Recommendation | The term 'recommendation' may be used herein to refer to one or more recommendations or suggestions that may be produced by embodiments of the present invention, for creating or customizing a video file. |
| Draft template, default draft video. | The terms "default draft video" or "draft template" may be used herein interchangeably to refer to a data element that may be presented by embodiments of the invention (e.g., as part of a recommendation) to a user on a video editor. The user may subsequently choose to apply user actions on the default draft video, including for example: reject the default draft video, accept the default draft video, alter the default draft video (e.g., by adding one or more audiovisual elements thereto), and/or publish the default draft video on an online platform. |
| Machine learning (ML) model, Neural network model | The term "machine learning" or "machine learning model" may relate to any computational structure, implemented in hardware, software or any combination thereof, and may include, for example an artificial neural node network (NN) as known in the art. |
| | A neural network may refer to an information processing paradigm that may include nodes, referred to as neurons, organized into layers, with links between the neurons. The links may transfer signals between neurons and may be associated with weights. A NN may be configured or trained for a specific task, e.g., pattern recognition or classification. Training a NN for the specific task may involve adjusting these weights based on examples. Each neuron of an intermediate or last layer may receive an input signal, e.g., a weighted sum of output signals from other neurons, and may process the input signal using a linear or nonlinear function (e.g., an activation function). The results of the input and intermediate layers may be transferred to other neurons and the results of the output layer may be provided as the output of the NN. Typically, the neurons and links within a NN are represented by mathematical constructs, such as activation functions and matrices of data elements and weights. A processor, e.g. CPUs or graphics processing units (GPUs), or a dedicated hardware device may perform the relevant calculations. |

Embodiments of the present invention include a method and a system for generating a customized video file that may address requirements and preferences of suppliers of online services and products, as well as the requirements and preferences of online consumers and end users. The customized video file may be generated according to user input from a user interface (UI), and according to feedback information pertaining to one or more viewer actions obtained from at least one online viewer.

The user input may include at least one of: data pertaining to user registration attribute and user actions data. The video file may, for example be customized according to at least one of a performance target and feedback data pertaining to one or more viewer actions, to produce optimal responsiveness of online viewers of the video file, as elaborated herein.

Embodiments of the present invention may enable a user to produce a draft video file by a video editor module and may provide one or more recommendations for customizing the draft video file. Embodiments may enable a user to interact with (e.g., accept or reject) the suggested recommendations on the video editor module, to produce a customized video file. Alternately, embodiments may automatically customize the draft according to the produced one or more recommendations.

As explained herein, embodiments of the invention may customize the draft video file according to various customization aspects.

For example, embodiments may include a machine learning (ML) model, trained to learn a user's specific taste and/or preferences according to previous actions performed by the user and recorded on a database. Embodiments may consequently provide recommendations for video customizations that pertain to aspects of the user's preferences, as explained herein. Additionally, or alternately, the ML model may be trained to learn a taste and/or preference of a plurality of users, according to previous actions performed by the plurality of users and recorded on the database. Embodiments may consequently provide recommendations for video customizations that pertain to aspects of the preferences and taste of the plurality of users, as explained herein.

In another example, embodiments may receive (e.g., from a user, as a hard-coded definition, and the like) one or more performance targets, as elaborated herein. Embodiments may provide a recommendation for customization of the draft file, based on feedback of one or more viewer actions, to produce a customized video that may produce optimal results when shown to a viewer (e.g., online, via a web browser), in view of the received one or more performance targets. The term 'optimal' may be used in this context in relation to one or more predefined performance targets. For example, the customized video may be produced to obtain optimal (e.g., maximal) responsiveness of online viewers of the video file (e.g., watch the entire video file, perform a predefined action following viewing of the video, etc.).

In yet another example, embodiments of the invention may aggregate information pertaining to presentation of other customized video files. Embodiments may subsequently provide one or more recommendation for customization of the draft video file based on cumulative filtering (CF), to produce customized video files that may fit a user's preferences and/or invoke optimal results when shown to a viewer, based on the aggregated data pertaining to presentation of other customized video files, as explained herein.

Embodiments or the invention may perform the process of video customization iteratively. For example, in a first iteration at least one processor may produce one or more first recommendations. Embodiments may customize the draft video file or may subsequently enable a user to customize the draft video file according to the one or more recommendations. Embodiments may then produce one or more second recommendations and so forth. The iterative process may proceed until, for example, a predefined performance target is met, as elaborated herein.

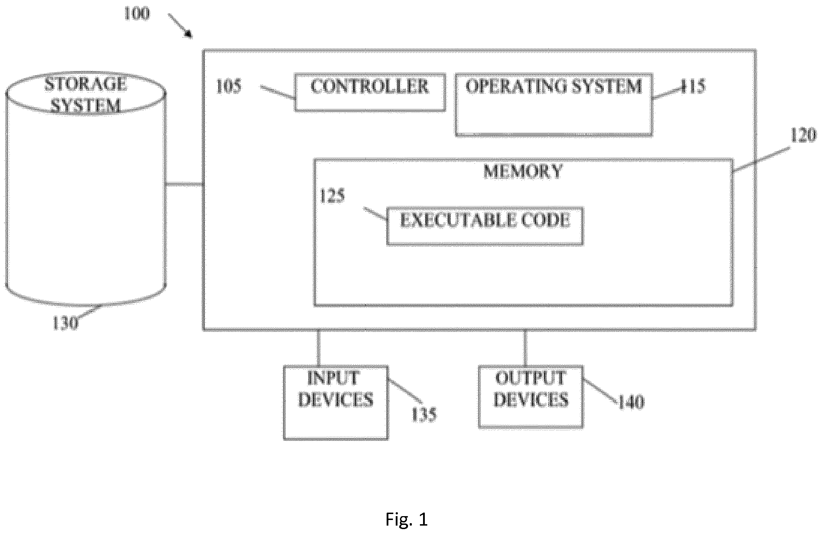

Reference is now made to Fig. 1, which is a block diagram depicting a computing device 100, which may be included within the system for generating a customized video file, according to some embodiments. Computing device 100 may include a controller 105 that may be, for example, a central processing unit processor (CPU), a chip or any suitable computing or computational device, an operating system 115, a memory 120, executable code 125, a storage system 130 that may include a model 136, input devices 135 and output devices 140. Controller 105 (or one or more controllers or processors, possibly across multiple units or devices) may be configured to carry out methods described herein, and/or to execute or act as the various modules, units, etc. More than one computing device 100 may be included in, and one or more computing devices 100 may act as the components of, a system according to embodiments of the invention.

Operating system 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or tasks or enabling software programs or other modules or units to communicate. Operating system 115 may be a commercial operating system. It will be noted that an operating system 115 may be an optional component, e.g., in some embodiments, a system may include a computing device that does not require or include an operating system 115.

Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of, possibly different memory units. Memory 120 may be a computer or processor non-transitory readable medium, or a computer non-transitory storage medium, e.g., a RAM.

Executable code 125 may be any executable code, e.g., an application, a program, a process, task or script. Executable code 125 may be executed by controller 105 possibly under control of operating system 115. For example, executable code 125 may be an application that produces one or more customized video files, as described herein. Although, for the sake of clarity, a single item of executable code 125 is shown in Fig. 1A, a system according to some embodiments of the invention may include a plurality of executable code segments similar to executable code 125 that may be loaded into memory 120 and cause controller 105 to carry out methods described herein.

Storage system 130 may be or may include, for example, a flash memory as known in the art, a memory that is internal to, or embedded in, a micro controller or chip as known in the art, a hard disk drive, a CD-Recordable (CD-R) drive, a Blu-ray disk (BD), a universal serial bus (USB) device or other suitable removable and/or fixed storage unit. Content may be stored in storage system 130 and may be loaded from storage system 130 into memory 120 where it may be processed by controller 105. In some embodiments, some of the components shown in Fig. 1A may be omitted. For example, memory 120 may be a non-volatile memory having the storage capacity of storage system 130. Accordingly, although shown as a separate component, storage system 130 may be embedded or included in memory 120. Model 136 may be, or may include, a timing model that includes timing properties of messages, or expected behavior of messages, as described herein. As further described, model 136 may be, or may include, a content model that may include content attributes or properties of messages, or expected content related behavior of messages, as described herein.

Input devices 135 may be or may include any suitable input devices, components or systems, e.g., a detachable keyboard or keypad, a mouse and the like. Output devices 140 may include one or more (possibly detachable) displays or monitors, speakers and/or any other suitable output devices. When screens are discussed herein, they may be computer monitors such as output devices 140. Any applicable input/output (I/O) devices may be connected to computing device 100 as shown by blocks 135 and 140. For example, a wired or wireless network interface card (NIC), a universal serial bus (USB) device or external hard drive may be included in input devices 135 and/or output devices 140. It will be recognized that any suitable number of input devices 135 and output device 140 may be operatively connected to computing device 100 as shown by blocks 135 and 140.

A system according to some embodiments of the invention may include components such as, but not limited to, a plurality of central processing units (CPU) or any other suitable multi-purpose or specific processors or controllers (e.g., controllers similar to controller 105), a plurality of input units, a plurality of output units, a plurality of memory units, and a plurality of storage units.

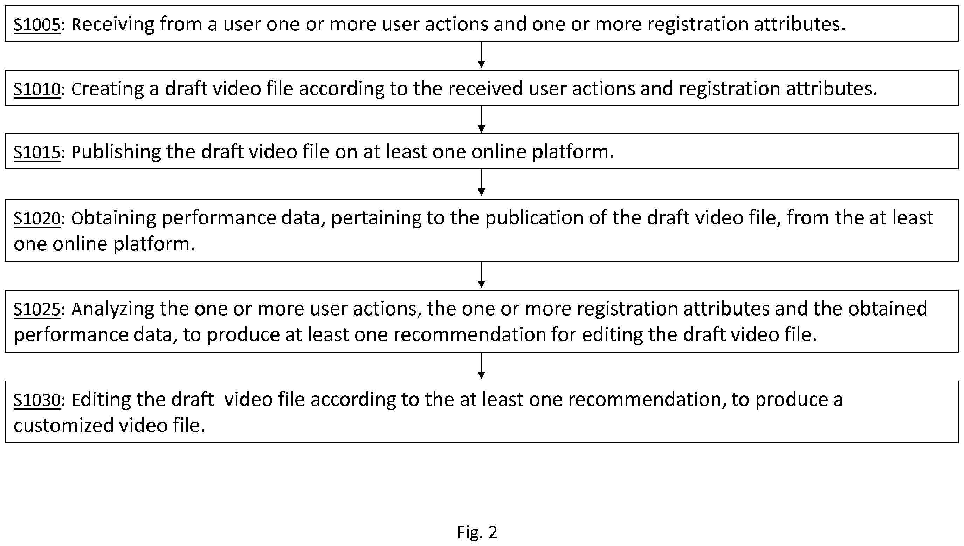

Reference is now made to Fig. 2, which depicts a method for generating customized video files by one or more processors (e.g., element 105 of Fig. 1), according to some embodiments.

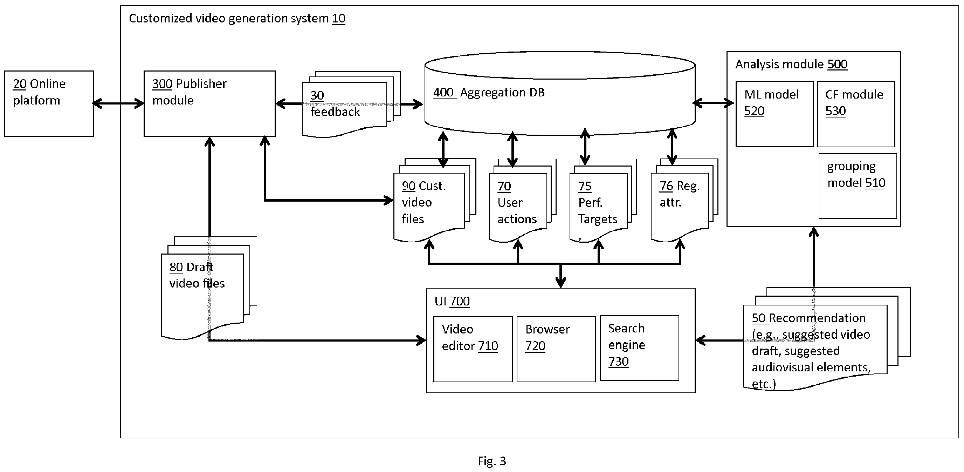

According to some embodiments, a processor (e.g., element 105 of Fig. 1) may run or execute one or more software modules (e.g., element 125 of Fig. 1) on computing device 100. The one or more software modules may be or may include a video editor (element 710 of Fig. 3, displaying output on a monitor such as an output device 140).

As shown in step S1005, processor 105 may receive from the user (e.g., via input 135 of Fig. 1) one or more user input data elements. The input data elements may include for example, one or more user actions and / or one or more registration attributes.

The one or more user actions may include for example selection of one or more audiovisual elements (e.g., animated characters, sounds, background image, etc.), a placement (e.g., on a viewing screen) of the selected audiovisual elements, a resizing (e.g., a setting and/or change of a size) of an audiovisual element, a color of an audiovisual element and/or a timing of the appearance of the audiovisual elements.

The one or more registration attributes may include for example at least one data element that may correspond to the appearance of the customized video, and the video editor may select, or may present for selection by a user at least one audiovisual element that may correspond with the one or more registration attributes. For example, geolocation data of target viewers may dictate a language in which a narrated text may be read. In another example, one or more types of the customized video required by the user (e.g.: a public service video, a commercial, etc.) and/or one or more categories of the customized video type (e.g.: for a commercial type video, this may be a commercial for a gift shop, a restaurant, a service, etc.), may correspond with respective templates for draft videos, as known in the art. Embodiments of the invention may select a draft template and/or display a selection of relevant draft templates to the user, and enable the user to select the most appropriate template for their required customized video, according to their personal preferences.

As shown in step S1010, the video editor (e.g., element 710 of Fig. 3) may create a draft video file according to the received user actions and/or registration attributes.

According to some embodiments, the draft video file may be or may include a data structure, that may include a plurality of frames and/or audio data, that when presented (e.g., on a computer screen) in sequence may be viewed as a video, as known in the art. Additionally, or alternately, the data structure may include one or more data elements that may include or represent audiovisual elements of any appropriate format (e.g., a Graphics Interchange Format (GIF) element, a Joint Photographic Experts Group (JPG), a Waveform Audio File Format (WAV) element, etc.), that may be rendered, integrated or incorporated by video editor 710, to produce a presentable video file.

Pertaining to the same example, video editor 710 may be configured to receive the one or more selections of one or more audiovisual elements, combine one or more data elements pertaining to the one or more selected audiovisual elements according to the one or more user actions (e.g., according to the placement and/or timing defined or selected by the user) and render the combined data to produce a draft video file, as known in the art.

As shown in step S1015, embodiments of the present invention may include a publisher module (e.g., element 300 of Fig. 3), configured to publish the draft video on at least one online platform (e.g., a commercially available, online social media platform such as Facebook, Instagram, YouTube, and the like) as known in the art, to make the file accessible for viewers via the internet.

The term 'publish' may be used in this context, as known in the art, in the sense of storing the draft video or a reference (e.g., a pointer) thereto on one or more computing devices (e.g., computer servers) which may have components such as shown in Fig. 1, so as to make the video accessible by and/or viewed by viewers via computing systems (e.g. local user computers such as those shown in fig. 1) that are communicatively connected to the one or more servers.

As shown in step S1020, embodiments of the present invention may obtain performance data, pertaining to viewing (e.g., of a human viewer on a web browser) of the published draft video file, from the at least one online platform. For example, a publisher module (e.g., element 300 of Fig. 3) may be further configured to obtain or pull (e.g. request and/or receive) one or more data elements pertaining to feedback of one or more viewer actions from at least one online platform, using at least one application programming interface (API) of a service respective to the at least one online platform. Pertaining to the same example, the publisher module (e.g., element 300 of Fig. 3) may publish the draft video on an online platform (e.g., Instagram) and use the appropriate APIs (e.g., APIs pertaining to Instagram) to obtain feedback, as elaborated herein, of one or more viewer actions pertaining to viewing (e.g., by a human viewer, via a web browser) of the published draft video thereat (e.g., obtain the number of complete views of the draft video on Instagram).

As shown in step S1025, embodiments of the present invention may analyze the one or more user actions, the one or more registration attributes and the obtained performance data, to produce at least one recommendation for editing the draft video file.

For example, embodiments of the present invention may include an analysis module (e.g., element 500 of Fig. 3) that may be or may include one or more machine learning (ML) based models (e.g., element 510 of Fig. 3).

In some embodiments, the ML model (e.g., element 510 of Fig. 3) may receive as input at least one of the one or more user actions, the one or more registration attributes and further receive as supervisory input at least one performance target (e.g., a required click per view ratio) and one or more data elements pertaining to feedback of one or more viewer actions from the online platform (e.g., an actual, monitored click per view ratio). The ML model (e.g., element 510 of Fig. 3), may be trained, as known in the art, to generate or produce one or more recommendations for improving or optimizing the customization of the draft video file in view of the performance target and monitored performance data (e.g., feedback data of one or more viewer actions from the online platform). Pertaining to the same example, the ML model (e.g., element 510 of Fig. 3) may produce a recommendation for adding and/or substituting one or more audiovisual elements in the draft video file so as to predict an improved click per view ratio, as elaborated herein in relation to Fig. 3

Additionally, or alternately, the analysis module (e.g., element 500 of Fig. 3) may be configured to accumulate (e.g., on a database, such as element 400 of Fig. 3) registration data elements and/or user actions data elements pertaining to specific users. The analysis module may be or may include an ML based model (e.g., element 510 of Fig. 3), configured to learn the specific users' preferences and/or requirements and produce one or more recommendations for customization of the draft video file, to best fit the specific user's preferences and/or requirements, as known in the art. For example, the analysis module may produce one or more recommendation to add and/or substitute one or more audiovisual elements in the draft video file that may fit (e.g., may resemble and/or be close in appearance to) one or more audiovisual elements previously selected by the user.

Additionally, or alternately, the analysis module (e.g., element 500 of Fig. 3) may be configured to accumulate (e.g., on a database, such as element 400 of Fig. 3) data pertaining to a plurality of customized video files. The analysis module may include an ML based grouping model (e.g., element 510 of Fig. 3), configured to group or cluster the plurality of customized video files. The analysis module may include a cumulative filtering (CF) module (e.g., element 500 of Fig. 3), configured to produce customized video files that may fit a user's preferences and/or invoke optimal results when shown to a viewer, based on the aggregated data pertaining to presentation of other customized video files, as elaborated herein.

According to some embodiments, a recommendation may include, for example one or more suggestions for:
addition of audiovisual elements to a draft video (e.g., placement and timing of appearance of an audiovisual element in the draft video);
omission of one or more audiovisual elements from the draft video;
modification or alteration (e.g., a change in color, text, sound, etc.) of one or more audiovisual elements in the draft video, etc.

Additionally, or alternately, a recommendation may include a suggested configurable animated video template that may be presented to a user on a video editor (e.g., element 710 of Fig. 3), and may be utilized by the user to render or produce an animated draft video, as known in the art. Additionally, or alternately, a recommendation may include a suggested default draft video or draft template that may be presented to a user on a video editor (e.g., element 710 of Fig. 3). The user may subsequently choose to alter the default draft video (e.g., by adding one or more audiovisual elements thereto), and/or publish the default draft video on an online platform.

According to some embodiments, at least one recommendation may be presented to the user on a user interface of a video editor (e.g., element 710 of Fig. 3) as one or more lists of selectable elements. The one or more lists may include, for example: selectable default draft videos and selectable audiovisual elements.

The selectable default draft videos may include one or more video templates, upon which the user may perform alterations or modifications (e.g., add or omit audiovisual elements) via a video editor module (e.g., element 710 of Fig. 3) so as to produce a draft video according to their preference. The one or more video templates may be adapted to receive one or more audiovisual elements (e.g., animated objects, text elements, and the like), so as to present the received one or more audiovisual elements in a video stream.

The one or more lists of selectable audiovisual elements may include for example, at least one of: a list of visual content elements, a list of audio content elements, a list of themes, a list of textual elements, and the like. The user may select one or more of the selectable audiovisual elements by a video editor module (e.g., element 710 of Fig. 3), perform alterations or modification on one or more audiovisual elements (e.g., change a color, a tune, a language, a location, a timing of appearance, etc.), associate between the selected one or more audiovisual elements with a video template and render the video template as known in the art to produce a draft video.

As shown in step S1030, embodiments of the present invention may edit the draft video file according to the at least one recommendation, to produce a customized video file. In some embodiments, a processor may present (e.g., on a video editor UI, such as element 710 of Fig. 3) one or more recommendations for video customization (e.g., addition of an audiovisual element to a draft video) to a user and prompt the user to interact with the suggested recommendation, such as to provide input to accept or reject the recommendation. Additionally, or alternately, embodiments of the present invention (e.g., a video editor module such as element 710 of Fig. 3) may be configured to receive the recommendation and automatically edit the draft video file (e.g., add an audiovisual element to a draft video) according to the at least one recommendation, without requiring the user to act on the recommendation through the UI.

Reference is now made to Fig. 3, which depicts a system 10 for generating customized video files, according to some embodiments. System 10 may be implemented by or may include a computing device (e.g.: element 100 of figure 1), adapted to perform one or methods for generating a customized video file, as elaborated herein.

According to some embodiments, system 100 may include at least one of: a user interface (UI) 700, an aggregation database (DB) 400, an analysis module 500 and a publisher module 300. Such modules and other modules or devices (e.g. a user computer used to view a video, a central server communicatively connected to the user computer, and an online platform (e.g., a cloud-based service) that may be used to store, distribute and edit a video, etc.) may be or may be executed by processors controller 105 shown in Fig. 1.

Embodiments of the present invention include a method and a system for generating a customized video file according to at least one user input data element from UI 700, including at least one of user registration attribute(s) 76 and data pertaining to user actions 70.

According to some embodiments, the user registration attributes' data 76 may include at least one attribute that may be assigned to a video file (e.g., to a customized video file which the user may require to produce). The at least one attribute may include one or more attributes, such as:
one or more parameters of a user's identity (e.g.: name, age, gender, nationality, profession, etc.);
a type of the customized video required by the user (e.g.: a public service video, a commercial, etc.);
a category of the customized video type (e.g.: for a commercial type video, this may be a commercial for a gift shop, a restaurant, a service, etc.);
geolocation related data (e.g.: countries and languages where the customized video is intended to be presented); and
timing of an intended presentation of the customized video file (e.g., in vicinity to holidays, at a predefined season, on predefined days of the week, at predefined times of the day, etc.).

According to some embodiments, UI 700 may be configured to enable a user to input at least one registration attribute 76 and store it on an aggregation database (DB) 400 for further analysis, as elaborated herein.

According to some embodiments, a user may input one or more data elements pertaining to performance targets 75, associated with at least one feedback 30 (e.g., data returned or pulled from one or more online platforms) including information on one or more viewer actions that may be performed by one or more human viewers of an online presentation (e.g., on a web browser) of the customized video file.

For example, a draft video file (e.g., in an initial iteration) or a customized video file (in a subsequent iteration) may be published via an online platform (e.g., a social network platform) and be made available for viewing over the internet. Performance target 75 may be defined as a minimal required ratio of mouse clicks-perviews of the published video file, and the respective feedback 30 may be actual mouse clicks that may be monitored by embodiments of system 100 as elaborated herein, to produce the actual ration of mouse clicks-per-view for the presented video. In some embodiments, the at least one performance target 75 may be included, and input by the user as part of registration attribute data 76.

The one or more feedback 30 on one or more viewer actions may include, for example at least one of: a number of complete views of the video, a number of interrupted views of the video, a number of mouse clicks relating to presentation of the video, a number of 'like' and/or 'dislike' feedbacks relating to presentation of the video a number of left user comments relating to presentation of the video, a content (e.g., a textual content) of user comments relating to presentation of the video (e.g., text including praise or denouncement of the published video), etc.

According to some embodiments, system 10 may be configured to monitor and accumulate feedback data 30 including feedback of viewer actions relating to specific customized video files. Feedback data 30 may by analyzed by system 10 to optimize the customization of videos in relation to at least one target 75, as elaborated herein.

According to some embodiments, user actions data 70 may include information regarding actions that may be performed by the user on UI 700, in during, or in relation to the generating a draft video file 80 or a customized video file 90. User actions data 70 may be accumulated and stored on aggregation DB 400 for further analysis, as elaborated herein.

According to some embodiments, UI 700 may be or may include a video editor module 710, configured to generate at least one draft video file (in an initial stage) and/or at least one customized video file (in a later stage). Video editor module 710 may enable users to perform user actions relating to the at least one draft video file, to produce a subsequent customized video file, as elaborated herein.

For example, video editor 710 may be configured to:
receive a one or more selectable default draft video files or video templates;
present the selectable default draft video files or templates to a user on UI 700;
accept user input to enable the user to select at least one default draft video file or template;
present one or more selectable lists of audiovisual elements on UI 700 (e.g., a first list of visual content elements, a second list of audio content elements, a third list of textual elements, etc.);
accept user input to enable the user to select at least one list of audiovisual elements from the one or more selectable lists of audiovisual elements;
accept user input to enable the user to select at least one audiovisual element from the at least one selected list of audiovisual elements;
accept user input to enable the user to apply user actions on the default draft or template, including for example inserting, adding, modifying and/or omitting the at least one selected audiovisual element in the selected default draft video file or template;
accept user input to enable the user to edit the draft video file (e.g., 'cut' and 'paste' parts of the draft video file, as known in the art; and
accept user input to render the drafted video file or template, to produce a customized video file, according to the selected draft video file or template and the respective user actions applied to it.

For example, a customized video file may include: the selected draft video file, modifications or editions that the user may have done to the selected draft video file; and insertions of audiovisual elements to the selected draft video file.

According to some embodiments, the list of selectable audiovisual elements may include one or more selectable lists of audiovisual elements, including for example:
a list of visual content elements (e.g., background elements such as landscapes, foreground elements such as people, animals, inanimate objects, etc.);
a list of audio content elements (e.g., sounds, voices, narration of text, etc.);
a list of themes (e.g., tunes, musical elements, etc.);
a list of textual elements (e.g., texts, fonts, a position text on a screen, an appearance of text (e.g., fade-in, fade-out)), and the like.

According to some embodiments, video editor 710 may be configured to enable users to perform at least one user action 70, including for example:
selection of at least one draft video file from a plurality of draft video files;
selection of at least one audiovisual element from at least one list of selectable audiovisual elements;
insertion of the selected audiovisual element in the draft video;
time-wise ordering of selected audiovisual elements in the draft video;
placement of one or more selected audiovisual elements on a screen, etc.

According to some embodiments, UI 700 may be associated with, or may include a browser 720, adapted to enable a user to browse through data of at least one of: (a) an online server (e.g., via the internet, not drawn); and/or (b) data included or stored in aggregation DB 400.

According to some embodiments, UI 700 may be associated with, or may include an internal search engine 730, enabling a user to search for content from at least one of: (a) the online server; and/or (b) aggregation DB 400.

According to some embodiments, UI 700 may be configured to monitor user actions 70 associated with the browsing of data on browser module 720 and/or searching of data via internal search engine 730. Such user actions may include for example: monitoring search words entered by a user in the internal search engine 730, viewing or browsing of one or more elements on browser module 720, and the like. Accordingly, data pertaining to a user's interests, as manifested by the user's browsing or searching of data may be included within user actions data 70.

According to some embodiments, system 10 may be configured to monitor at least one user action 70, performed by a user on UI 700 and record the user action in aggregation DB 400. For example, system 10 may record or monitor: (a) a user's selection of specific one or more audiovisual elements (e.g., video content elements, audio content elements, textual elements etc.) and/or insertion of the selected audiovisual elements in a video sequence on video editor 710; (b) a user's browsing through data on browser 720; and (c) a user's interest or preference as manifested by at least one searched word on search engine 730.

According to some embodiments, publisher module 300 may be configured to publish the draft video on an online platform 20 as known in the art, to make the file accessible for viewers via the internet. For example, publisher module 300 may be configured to publish the draft video on a commercially available, online social media platform such as Facebook, Instagram, YouTube, and the like.

Publisher module 300 may be configured to obtain performance data, including at least one data element pertaining to feedback 30 on one or more viewer actions that may be performed by one or more viewers of the at least one online platform, including for example: selection of a menu item, clicking a button, placing an order, scrolling through text, browsing to a continuation page, and the like. In some embodiments, publisher module 300 may obtain or pull (as commonly referred to in the art) the data (e.g., the feedback 30) from the at least one online platform 20, using at least one application programming interface (API) of a service respective to the at least one online platform.

For example, publisher module 300 may publish the draft video on an online platform (e.g., Facebook) and use the appropriate APIs (e.g., APIs pertaining to Facebook) to obtain feedback 30 on one or more viewer actions, pertaining to viewing (e.g., by a human viewer, on a screen of their computer) of the published draft video thereat (e.g., obtain the number of complete views of the draft video on Facebook).

According to some embodiments, system 100 may be configured to aggregate or collect one or more data elements pertaining to a plurality of video files (e.g., customized video files 90, draft video files 80, etc.) in a database (e.g., aggregation DB 400). The aggregated one or more data elements may, for example include for example: one or more user actions 70, one or more registration attributes 76, one or more performance data elements (e.g., feedback 30) and one or more produced recommendations 50.

System 10 may include an analysis module 500, configured to receive one or more data elements and analyze the one or more data elements to produce at least one recommendation for customizing a video file (e.g., customizing a draft video file to generate a customized video file).

According to some embodiments, analysis module 500 may receive as input at least one of:
a user input data element pertaining to one or more registration attributes 76, such as a type of a customized vide required by a user (e.g., a commercial);
one or more user actions 70 pertaining to one or more draft video files (e.g., selection of an audiovisual element, and inserting thereof in a draft video file);
data pertaining to feedback 30, in relation to one or more customized video files.

According to some embodiments, analysis module 500 may include one or more machine learning (ML) based models 520 that may be trained to learn one or more preferences of a specific user, and subsequently generate, or predict (as commonly referred to in the art) one or more recommendations for creating or customizing a draft video file that is customized according to the user's preferences.

For example, ML model 520 may receive as input one or more identifiers of suggested audiovisual elements (e.g., audiovisual elements presented to the user on video editor 710) and/or one or more identifiers of suggested draft videos (e.g., draft videos that may have been included in a previous recommendation 50). ML model 520 may further receive, as supervisory input, one or more user actions that may have been performed or applied by the specific user on the input audiovisual elements and/or suggested draft videos, including for example selection of the suggested elements (e.g., as positive feedback) or rejection of the suggested elements (e.g., as negative feedback). As known in the art of artificial intelligence (AI), ML model 520 may be trained, during a training phase, on a training data set, including for example a first set of suggested audiovisual elements and/or draft videos. When the training phase is complete, ML model 520 may be adapted to generate one or more recommendations and present the recommendation to the user on UI 700.

In some embodiments, the recommendation may be presented to the user as at least one list that may include one or more selectable audiovisual elements and/or recommended draft videos. The at least one list may be customized such that the one or more selectable audiovisual elements are selected by ML model 520 according to the user's preferences, as manifested in the supervisory input of user actions.

According to some embodiments, analysis module 500 may receive one or more input data elements pertaining to customized video files. As elaborated herein the one or more input data elements may include for example, a registration attribute 76, data pertaining to feedback 30 and one or more user actions 70.

Analysis module 500 may analyze the one or more received input data elements pertaining to customized video files (e.g., from aggregation DB 400), to produce at least one recommendation for customizing a video file, according to a model of cumulative filtering, as explained herein.

Analysis module 500 may include one or more grouping models 510. Each grouping model may receive a plurality of customized video files 90 and may be adapted to group or cluster the plurality of customized video files 90, according to the received one or more input data elements (e.g., 30, 70, 75, and 76), into video groups. Each group of the grouping model 510 may include or may refer to one or more customized videos 90.

The term "grouping model" may be used herein to refer to any type of model, where a plurality of customized video files may be grouped according to any type of machine learning (ML) and/or pattern recognition algorithm. Grouping model 510 may be or may include for example, at least one of a supervised classification module, an unsupervised clustering module, and the like.

According to some embodiments, grouping model 510 may include or may be associated with a cumulative filtering (CF) module 530, adapted to assign a score, as elaborated herein, to one or more audiovisual elements that may be included in the customized video files 90, grouped in grouping model 510, and/or to the actual customized video files 90 grouped in grouping model 510.

Analysis module 500 may receive a new draft video file 80 (e.g., a draft video file that may be produced by a user on video editor 710). The new draft video file 80 may be associated with one or more input data elements, including for example at least one of a feedback 30, a user action 70 a performance target 75 and a registration attribute 76. Analysis module 500 may associate the new draft video file 80 with a video group or cluster of the plurality of video groups in grouping model 510, based on the at least one received input data element (e.g., 30, 70, 75, 76) of the new draft video, as known in the art.

Analysis module 500 may then produce at least one recommendation for generating, customizing and/or editing at least one draft video, based on at least one of:
scores of customized video files of the associated group; and
scores of audiovisual elements included in customized video files of the associated group.

For example, assuming that the associated video group includes one or more customized videos that most resemble the new draft video in their respective input data elements (e.g., 30, 70, 75, 76), the recommendation 50 may include a selection of the highest scoring audiovisual elements included in customized video files of the associated group.

Recommendation 50 may be presented to the user via video editor module 710 as a list of one or more selectable audiovisual elements, from which the user may, for example, select one or more elements to insert into the draft video file 80, as part of the customization process, of producing a new customized file 90. Additionally, or alternately, video editor module 710 may receive the content of recommendation 50 and apply the recommendation 50 automatically on the new draft video file 80, to produce a new customized file 90 automatically.

According to some embodiments, analysis module 500 may be configured to produce at least one recommendation for generation of a draft video file, based on the grouping model 510, that may be optimized per the user registration attributes, according to at least one predefined target.

In other words, in embodiments where grouping model 510 may be a supervised, ML-based classification model, grouping model 510 may receive as input one or more data elements pertaining to registration attributes 76 and one or more data elements pertaining to at least one predefined target 75. Grouping model 510 may receive feedback 30 on one or more viewer actions as supervisory input. Grouping model 510 may be trained according to the received data, as known in the art to produce one or more recommendations for generation of a draft video file.

For example, a user (e.g., a vendor of pizzas) may require producing a video (e.g.: a commercial for an online pizzeria in New York), that may be intended for online presentation at a predefined time (e.g., during winter time), and may be associated with a specific target (e.g., the video should drive users to order pizzas online, for example by clicking an "Order now" button).

Analysis module 500 may identify customized videos that may have been used in relation to similar video groups in grouping-model 510 (e.g.: videos that are assigned a similar set of registration data attributes, like the above set of: commercial, pizzeria, New York and winter).

CF module 530 may assign a high score to customized videos 90 that may have a high rate of responsiveness to similar targets (e.g.: have a high click-per-view rate on presented "Order now" buttons).

According to some embodiments, analysis module 500 may produce at least one recommendation based on the identified customized videos 90 that have the highest scores. The recommendation may include one or more audiovisual elements of at least one identified customized video, including for example: visual-content elements, audio-content elements, order of content elements within the identified customized video, themes, texts and fonts used in the identified customized video, etc.

In other words, grouping model 510 may associate the required video with one or more video groups that may have similar characteristics to those of the required video (e.g., similar registration data, similar targets, etc.) and identify videos that may have a high rate of responsiveness (e.g., assigned high scores by CF module 530) to similar targets. Analysis module 500 may subsequently produce at least one recommendation for creating a draft video 80, that may include for example, audiovisual elements that may be, or may be similar to audiovisual elements used in the identified customized videos 90. For example, such recommendations may include a similar type of music, a similar type of background image, a similar narration of text, a similar presenter of information, etc.

According to some embodiments, system 10 may be configured to store at least one customized video or a reference (e.g., a pointer) thereto in aggregation DB 400. Additionally, or alternately, system 10 may be configured to store at least one audiovisual element (e.g.: a visual content element, an audio content element, etc.) of a customized video in aggregation DB 400.

According to some embodiments, the produced at least one recommendation may be propagated from aggregation DB 400 to video editor 710, to enable the user to select a draft video file, fine tune the appearance of the draft video file (e.g.: according to their personal taste), and generate a subsequent customized video file 90 that may be customized according to the at least one registration attribute 76 such as a video's type (e.g., a public broadcast) and the user's preferences (e.g., as manifested in user actions 70), and adapted or optimized to meet or accommodate the predefined performance target 75.

According to some embodiments, the analysis of the one or more input data elements (e.g., 70, 76, 30), production of the at least one recommendation and editing of the draft video file 80 may be performed repeatedly or iteratively, until the at least one performance target 75 is met, or in other words, until a monitored feedback 30 (e.g., monitored ratio of mouse clicks-per-view) match or surpass a predefined target (e.g., target ratio of mouse clicks-per-view).

As elaborated herein, system 10 may be configured to monitor user actions in relation to UI 700, such as selecting, inserting and/or omitting audiovisual elements from a draft video or video template on video editor 710, browsing through online data through browser 720 and searching for specific search words on search engine 730.

CF module 530 may assign a score to one or more customized videos 90 and/or audiovisual elements included therein, based on specific user actions. For example: 'positive' actions, such as selecting an audiovisual element and/or a customized video file as basis for further customization, may cause CF module 530 to assign a positive score to the respective audiovisual element and/or a customized video file. In a complementary manner, 'negative' actions, such as rejection of a recommended draft video or omission of an audiovisual element from a draft video file may cause CF module 530 to assign a negative score to the respective audiovisual element and/or the recommended draft video file.

Analysis module 500 may subsequently produce at least one recommendation 50 for generation and/or customization of a draft video file, that may be based on the user's preferences as manifested by data pertaining to the monitored user actions. For example, recommendation 50 may include presentation of the highest scored audiovisual elements and/or customized video files for selection by the user on video editor module 710.

According to some embodiments, analysis module 500 may be configured to receive at least one predefined data volume threshold and produce one or more recommendations for generation of at least one customized video that are further based on the data volume threshold.

For example, if the accumulated amount of data relating to a specific video group of grouping model 510 is lower than the data volume threshold (e.g.: pertaining to the pizzeria example above, insufficient or no feedback data 30 has been accumulated regarding responsiveness of viewers to online pizzeria commercials), analysis module 500 may emit a predefined (e.g., a default) recommendation for generating a required customized video file (e.g.: emit a recommendation for generation of a customized video file consisting of predefined, default video content and default audio content).

According to some embodiments, grouping model 510 may be trained according to attributed weights, tags and points, as described herein.

Recommended draft videos 80 and customized video files 90 may be attributed a score of points. User actions 70 may be attributed a weight and a tag, and feedback 30 on one or more viewer actions may be attributed a weight and a tag.

Customized videos 90 may perform better or worse than the average of other customized videos within the same group of grouping model 510, in view of a desired target (e.g., a minimal desired click per view ratio) and in view of a respective viewer action (e.g., the actual ratio of clicks per the number of views). A customized video may respectively be added or subtracted a weighted number of points according to its performance.

In other words, system 10 may be configured to monitor viewer actions in relation to one or more published draft video file or customized video file, that may include at least one audiovisual element. CF module 530 may apply one or more weighted scores to one or more audiovisual elements, based on the monitored viewer actions (e.g., a negative weighted score to one or more audiovisual elements of a customized video that does not meet a predefined performance target and a positive weighted score to one or more audiovisual elements of a customized video that meets or accommodates the predefined performance target).

CF module 530 may subsequently accumulate the one or more weights to assign one or more scores to respective one or more audiovisual elements. Additionally, or alternately, CF module 530 may accumulate the one or more weights to assign one or more scores to respective one or more customized video files 90 or published draft video files 80.

Grouping model 510 may consequently recommend a customized video and/or one or more audiovisual elements included in the customized video according to its score. For example, if a customized video has, or is attributed a high score (e.g., surpassing a predefined threshold), then the customized video and/or one or more audiovisual elements included therein may be recommended by grouping model 510. Otherwise, the customized video and/or audiovisual elements included therein may not be recommended by grouping model 510.

Additionally, or alternately, analysis module 500 may be configured to tag customized videos in view of predefined performance targets, to produce one or more recommendations for generating a draft video.

For example, assume a user requires to produce a video (e.g., a customized commercial video) that may be associated with a predefined performance target (e.g., produce a maximal click per view percentage among viewers).

Grouping model 510 may consequently score customized videos of the same group (e.g., commercials for similar products or services) as that of the required video, according to their performance (e.g., according to their clicks-per-view percentage). For example, videos that have a clicks-per-view percentage that is higher by X% than the average of the clicks-per-view percentage of other customized videos in the same group may be tagged as positive, and the customized video may be attributed a respectively positive weighted number of points (e.g.: (Weight * X) points). In a complementary manner, videos that have a clicks-per-view percentage that is lower by Y% than the average of the clicks-per-view percentage of other customized videos in the same group may be tagged as negative, and the customized video may be attributed a respectively negative weighted number of points (e.g.: - (Weight * Y) points). Grouping model 510 may produce a recommendation that may including one or more audiovisual elements of the top-scored customized videos of the same video group (e.g., videos of similar registration data such as commercials videos for similar products).

According to some embodiments, draft video recommendations may be also scored according to monitored user actions.

As elaborated herein, recommendation 50 may include one or more suggested audiovisual element and/or draft video file, that may be presented on UI 700 to the user, enabling the user to interact with (e.g., accept or reject) the suggested elements of recommendation 50. System 10 may be configured to monitor user actions in relation to one or more recommendations 50 that may include at least one audiovisual element.

CF module 530 may apply one or more weights to one or more audiovisual elements based on the monitored user actions. For example, a 'positive' action, such as selection of an audiovisual element or suggested draft video may cause CF module 530 to assign a positive weighted score to the respective audiovisual element or video file. In a complementary manner, a 'negative' action such as rejection of the suggested draft video or omission of the audiovisual element therefrom may cause CF module 530 to assign a negative weighted score to the respective audiovisual element or video file. CF module 530 may accumulate the one or more weights to assign one or more scores to respective one or more audiovisual elements. Additionally, or alternately, CF module 530 may accumulate the one or more weights to assign one or more scores to respective customized video files 90 or published draft video files 80.

Grouping model 510 may subsequently produce a recommendation based on the accumulated scoring. For example, a user may select or dismiss a recommended draft video on video editor 710. Selecting the recommended draft video may tag it as positive and may attribute a positive weight of points to the recommended draft video (e.g.: +4 points). Alternately, dismissing the recommended draft video by a user of video editor 710 may tag the recommended draft video as negative, and subtract a weighted number of points (e.g.: -2 points) from it.

According to some embodiments, grouping model 510 may recurrently receive feedback data 30 on one or more viewer actions and/or user actions data 70, to recurrently update the scoring of each customized video in each video group and provide the highest rated recommended video drafts 80 to video editor 710.

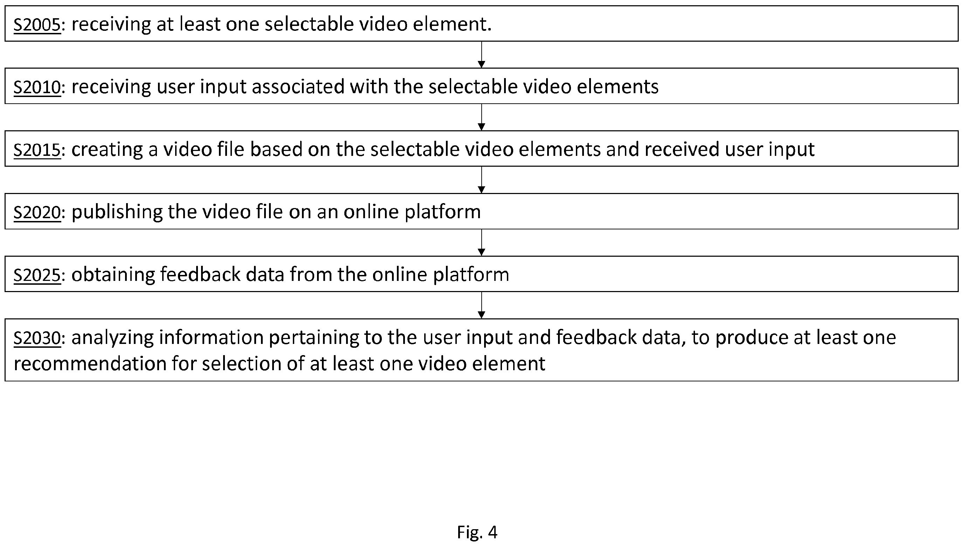

Reference is now made to Fig. 4, which depicts a method for generating customized video files, according to some embodiments.

In block S2005, a processor may receive at least one selectable audiovisual element. For example, video editor 710 may receive at least one draft video file, including video content, audio content, a theme, a font, an icon, etc.

In block S2010, a processor may receive user input associated with the selectable audiovisual element. For example, video editor 710 may enable a user to select a draft video file, select at least one audiovisual element from a list relating to the selected draft video file, edit the draft video file and insert the selected at least one audiovisual element to the draft video file.

In block S2015, a processor may create a video file based on the selectable at least one audiovisual element and the received user input. For example, video editor 710 may produce a video file based on the selected draft file, and on user actions performed by the user on the video editor, such as modification of the draft video and insertion of one or more audiovisual element therein.

In block S2020, a processor may publish the video file on an online platform (e.g., element 20 of Fig. 3). For example: publisher module 300 may publish the video file on the internet via a social network server (e.g.: Facebook, LinkedIn, Instagram and the like).

In block S2025, a processor may obtain feedback data (e.g., element 30 of Fig. 3) from the online platform. For example: publisher module 300 may utilize at least one API of a service respective to the online platform, to obtain feedback data 30 relating to online presentation of the video, in relation to a predefined target (e.g.: how many mouse clicks have online viewers performed as a percentage of online video presentations).

In block S2030, a processor may analyze information pertaining to the user input and feedback data 30, to produce at least one recommendation for selection of at least one audiovisual element. For example, analysis module 500 may analyze user actions and feedback data 30 to optimize the customization of videos in relation to at least one predefined target.

Embodiments of the present invention provide an improvement of state-of-the-art technology in the field of video production and editing, by incorporating capabilities of state-of-the-art video editors with a recommendation system. This combination may provide a practical application that may enable non-professional video creators to effortlessly or even automatically produce video files that may be customized according to their needs (e.g., to match a performance target), taste and preferences.

Embodiments may further include an improvement over state-of-the-art technology by optimizing the customization of a video using artificial intelligence methodology, applied on both ends of the produced video: that of the user (e.g., the producer of the video), and that of the viewer.

Furthermore, embodiments may repetitively monitor the performance of the presented video and may thus continuously modify the customized video in an iterative process, so as to suggest or produce a video that may be optimized to continuously achieve the user's goals.

Furthermore, embodiments may provide a practical method to produce customized video files or apply changes to suggested video files in a variety of resolutions. For example, users may choose to accept or reject a suggested draft video or video template (e.g., as a whole), or may choose to fine-tune the video by including, modifying and/or omitting various audiovisual elements (e.g., by changing a font, a color, a position, a size, an alignment, etc. of a visual content element).

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A system for producing a customized video file, the system comprising one or more non-transitory memory devices, wherein modules of instruction code are stored, and one or more processors respectively associated with the one or more memory devices, and configured to execute the modules of instruction code, whereupon execution of said modules of instruction code, the one or more processors are further configured to perform at least one of:
receive one or more user actions and one or more registration attributes;
create a draft video file according to the received user actions and registration attributes;
publish the draft video file on at least one online platform;
obtain performance data, pertaining to viewing of the published draft video file, from the at least one online platform;
analyze one or more data elements of the one or more user actions, the one or more registration attributes and the obtained performance data, to produce at least one recommendation for customizing or editing the draft video file.

2. The system of claim 1, wherein the one or more processors are further configured to:
i) edit the draft video file according to the at least one recommendation, to produce a customized video file; or
ii) receive at least one performance target and produce at least one recommendation that is adapted to meet the received at least one performance target.

3. The system of claim 1, wherein the at least one recommendation comprises at least one of:
a suggested addition of one or more audiovisual elements to the draft video;
a suggested modification of one or more audiovisual elements in the draft video;
a suggested omission of one or more audiovisual elements from the draft video;
a suggested configurable animated video template; and
a suggested default draft video.

4. The system of claim 3 wherein the one or more processors are further configured to present the recommendation to the user on a UI as one or more lists of selectable elements, wherein the one or more lists are selected from a group consisting of: selectable default draft videos and selectable audiovisual elements, and wherein the list of selectable audiovisual elements comprises at least one of: a list of visual content elements, a list of audio content elements, a list of themes and a list of textual elements.

5. The system of claim 2(ii), wherein the one or more processors are further configured to repeat the analysis of the one or more data elements, to produce the at least one recommendation and edit the draft video file iteratively, until the at least one performance target is met.

6. The system of claim 1, wherein the registration attributes are selected from a list consisting of: a type of a required customized video, a category of the customized video type, a geolocation related data element, a language related data element and a timing of intended presentation of the customized video file.

7. The system of claim 2(i), wherein the one or more processors are further configured to receive user input to perform the user actions on a video editor module so as to create the draft video file, wherein the at least one user action is selected from a list consisting of: selection of at least one audiovisual element from a list of selectable audiovisual elements, placement of at least one audiovisual element on a display, time-wise ordering of selected audiovisual elements, application of at least one configuration to a configurable animated video template, a web-search action for one or more audiovisual elements and interaction of a user with the at least one recommendation.

8. The system of claim 7, wherein the selectable audiovisual elements is selected from a group consisting: an animated video template, a visual content element, an audio content element, a theme, a narration of text, and a textual element.

9. The system of claim 1, wherein the performance data comprises at least one feedback of viewer actions, performed by one or more viewers of the at least one online platform, and wherein the one or more processors are further configured to obtain the performance data by using at least one application programming interface (API) of a service respective to the at least one online platform.

10. The system of claim 9, wherein the at least one feedback of viewer actions is selected from a group consisting of: a number of complete views of the draft video, a number of interrupted views of the draft video, a number of mouse clicks relating to presentation of the draft video, a number of 'like' feedbacks relating to presentation of the draft video, a number of 'dislike' feedbacks relating to presentation of the draft video, a number of user comments relating to presentation of the draft video, and a content of user comments relating to presentation of the draft video.

11. The system of claim 1, wherein the one or more processors are further configured to aggregate one or more data elements pertaining to a plurality of customized video files in a database, wherein the aggregated one or more data elements are selected from a list consisting of: a user action, a registration attribute, a performance data element and a produced recommendation.

12. The system of claim 11, wherein the one or more processors are further configured to analyze the one or more data elements by learning, by a machine learning (ML) based model, one or more preferences of a specific user, and wherein the recommendation for customizing the draft video file comprises presenting to the user at least one list comprising one or more selectable audiovisual elements and wherein the at least one list is customized according to the user's preferences.

13. The system of claim 11, wherein the one or more processors are further configured to analyze the one or more data elements by:
grouping the plurality of customized video files in a grouping model;
assigning a score to one or more audiovisual elements included in the grouped, customized video files;
associating the draft video file with a group of the grouping model; and
producing the at least one recommendation for customizing or editing the draft video file based on scores of audiovisual elements included in customized video files of the associated group.

14. The method of claim 13 wherein the one or more processors are further configured to assign a score to one or more audiovisual elements by:
monitoring user actions in relation to one or more recommendations comprising at least one audiovisual element;
monitoring user actions in relation to one or more audiovisual elements;
applying one or more weights to one or more audiovisual elements based on the monitored user actions; and
accumulating the one or more weights to assign one or more scores to respective one or more audiovisual elements.

15. The method of claim 13 wherein the one or more processors are further configured to assign a score to one or more audiovisual elements by:
monitoring viewer actions in relation to one or more published draft videos comprising at least one audiovisual element;
monitoring viewer actions in relation to one or more published customized videos comprising at least one audiovisual element;
applying one or more weights to one or more audiovisual elements based on the monitored viewer actions; and
accumulating the one or more weights to assign one or more scores to respective one or more audiovisual elements.
